# FASCICULE DE BREVET EUROPEEN

(11) **EP 3 295 364 B1**
(45) Date de publication et mention de la délivrance du brevet: **24.10.2018**
(21) Numéro de dépôt: 16725054.7
(22) Date de dépôt: 09.05.2016
(51) Int. Cl.: G06F 21/82, G06F 21/86, G06Q 20/20

(54) **SYSTÈME ET PROCÉDÉ DE DÉTECTION OPTIQUE D'INTRUSION, DISPOSITIF ÉLECTRONIQUE, PROGRAMME ET SUPPORT D'ENREGISTREMENT CORRESPONDANTS**
SYSTEM UND VERFAHREN ZUR OPTISCHEN EINDRINGUNGSDETEKTION UND ENTSPRECHENDE ELEKTRONISCHE VORRICHTUNG, PROGRAMM UND AUFZEICHNUNGSMEDIUM
SYSTEM AND METHOD FOR THE OPTICAL DETECTION OF INTRUSION, AND CORRESPONDING ELECTRONIC DEVICE, PROGRAM AND RECORDING MEDIUM

(30) Priorité: 12.05.2015 FR 1554265
(43) Date de publication de la demande: 21.03.2018
(73) Titulaire: Ingenico Group, 75015 Paris (FR)
(72) Inventeur: PAVAGEAU, Stéphane, 26600 La Roche de Glun (FR); CARABELLI, André, 07130 Saint-Peray (FR)
(74) Mandataire: Vidon Brevets & Stratégie
(86) Numéro de dépôt international: PCT/EP2016/060307
(87) Numéro de publication internationale: WO 2016/180767

(56) Documents cités:
- EP-A1- 2 232 400
- WO-A1-99/40501
- FR-A1- 2 909 788
- FR-A1- 2 998 695
- US-A1- 2008 117 046

## Description

### 1. Domaine de l'invention

L'invention se rapporte au domaine de la sécurisation de dispositifs électroniques comme par exemple des terminaux de paiement afin de sécuriser la saisie de données sensibles (telles que les chiffres d'un code confidentiel saisies via leur clavier, ou des données carte lues par un lecteur) ou encore des claviers indépendants, des lecteurs de carte (à puce, à piste ...) indépendants...

### 2. Art Antérieur

Une des attaques classiques contre un terminal de paiement électronique consiste à espionner les données saisies via le clavier (intégré au terminal de paiement électronique ou indépendant et rattaché au terminal de paiement électronique), et en particulier les chiffres correspondant par exemple à un code confidentiel saisi par un utilisateur pour sécuriser une transaction.

Pour ce faire, une attaque possible consiste à insérer, entre les touches et le circuit imprimé, plus précisément entre l'actuateur et le dôme, un élément « espion » (par exemple un circuit imprimé souple, des micros interrupteurs ou micros « switchs » en anglais, ou encore des détecteurs à effets hall) qui récupère l'information relative à un appui sur une touche, afin d'en déduire les chiffres saisis par l'utilisateur.

Une autre attaque possible consiste à insérer un film et des fils au-dessus du clavier pour intercepter les touches saisies par l'utilisateur. Pour ce faire, il est nécessaire pour le fraudeur de détériorer/usiner la surface du guide lumière (ou de remplacer complètement le guide lumière) mis en oeuvre dans le terminal de paiement électronique, en le grattant à certains endroits, pour pouvoir coller le film espion. Cette détérioration ne nécessite pas obligatoirement d'enlever le guide lumière du terminal de paiement électronique.

Certaines solutions ont donc été proposées pour tenter de limiter ces attaques, par exemple en diminuant fortement la taille du clavier, de façon à rendre plus difficile l'insertion de ces éléments espions, ou encore en mettant en oeuvre des techniques de détection du démontage du clavier, ce démontage étant souvent nécessaire pour insérer ces éléments espions.

D'autres solutions consistent à ajouter dans le terminal de paiement électronique, ou le clavier indépendant, des fausses touches exerçant des pressions permanentes et permettant ainsi de détecter le retrait du clavier. Cette solution nécessite donc l'ajout des pièces en compression et engendre des pressions permanentes dans les produits, ce qui induit des structures mécaniques plus rigides, et donc impacte le design.

D'autres solutions sont basées sur l'ajout d'un circuit de protection sous la forme d'un treillis.

Cependant, ces solutions nécessitent des modifications conséquentes de l'architecture du clavier, par l'ajout de modules de détection par exemple, et ne permettent pas de répondre à l'ampleur constatée de la fraude, les éléments espions devenant à leur tour de plus en plus petits et leurs techniques d'insertion de plus en plus discrètes. De plus, ces solutions sont très sensibles aux contraintes climatiques entrainant par exemple une corrosion des contacts, une migration des composés chimiques lors de la vie du produit, etc.

Par ailleurs, les attaques consistant à espionner les données d'une carte à puce lorsqu'elle est insérée dans un terminal de paiement électronique, ou un lecteur indépendant rattaché à un terminal de paiement électronique, sont également difficiles à contrer, par exemple lorsqu'elles sont mise en oeuvre par l'insertion d'une tête de lecture magnétique au niveau de la fente d'insertion de la carte à puce.

Le document WO 99/40501 A1 propose une technique d'effacement actif de données stockées dans un environnement sécurisé, lorsqu'une intrusion est détectée dans cet environnement. Un détecteur optique détecte une variation d'intensité lumineuse par rapport à une intensité lumineuse de référence, permettant la détection d'une intrusion.

Le document US 2008/117046 A1 décrit une technique de détection d'intrusion, dans un équipement électronique, utilisant des séquences binaires pseudo-aléatoires, pour un système comprenant un boîtier abritant au moins un élément à sécuriser, un médium optique et un générateur de bits pseudo-aléatoires.

Il existe donc un besoin pour une technique de sécurisation des dispositifs électroniques utilisés pour la saisie ou la lecture de données sensibles, technique permettant de contrer les attaques consistant à insérer un ou plusieurs éléments espions, tout en étant simple et peu couteuse à mettre en oeuvre.

### 3. Résumé de l'invention

L'invention propose une solution nouvelle qui ne présente pas l'ensemble de ces inconvénients de l'art antérieur, sous la forme d'un système de détection d'une intrusion dans un dispositif électronique.

Selon l'invention, le système comprend au moins un capteur optique relié à au moins un module de sécurité du dispositif électronique, le capteur optique et e module de sécurité étant configurés pour détecter une variation d'intensité lumineuse mesurée par le capteur optique par rapport à une intensité lumineuse de référence associée à au moins une source lumineuse prédéterminée interne au dispositif électronique, la variation d'intensité lumineuse étant représentative d'un risque d'intrusion dans le dispositif électronique.

De plus, le dispositif électronique comprend des moyens de transmission d'au moins un signal aléatoire d'allumage/extinction ou un signal aléatoire de variation à destination de la source lumineuse et la détection optique mise en oeuvre par le capteur optique et le module de sécurité tient compte du signal aléatoire transmis.

Ainsi, l'invention propose une solution nouvelle et inventive de la détection de tentative d'intrusion (par exemple par insertion d'un élément espion ou usinage d'une pièce telle que le guide lumière du clavier) dans un dispositif électronique, comme par exemple un terminal de paiement électronique, un clavier sécurisé indépendant (pouvant être rattaché à un terminal de paiement électronique ou tout autre dispositif électronique comme par exemple pour une application de télévision payante), un lecteur de carte (à puce ou à piste) sécurisé indépendant (pouvant être rattaché à un terminal de paiement électronique ou tout autre dispositif électronique), par détection optique.

Pour ce faire, l'invention, selon ses différents modes de réalisation, met en oeuvre un ou plusieurs capteurs optiques permettant de mesurer des variation(s) de l'intensité lumineuse, dans le dispositif électronique sécurisé, par rapport à une intensité lumineuse de référence associée à au moins une source lumineuse prédéterminée.

Ainsi, l'ajout de ce ou ces capteurs optiques à des endroits stratégiques à l'intérieur du dispositif électronique, en association avec une ou plusieurs source lumineuses internes au dispositif électronique, permet de détecter plusieurs types d'intrusion ayant pour effet de modifier l'intensité lumineuse (et plus particulièrement la luminance mesurée par ce ou ces capteurs) dans le dispositif électronique, par exemple par déplacement, ajout ou détérioration de composants du dispositif électronique.

Par exemple, une intrusion consistant à modifier la surface du guide lumière d'un clavier, ou à déplacer le guide lumière, peut être ainsi détectée, tout comme une intrusion consistant à ajouter une tête de lecture au niveau de la fente d'insertion d'une carte à mémoire, selon le placement du ou des capteurs optiques.

Pour ce faire, un ou plusieurs capteurs sont donc ajoutés :
- soit en association avec une ou plusieurs sources lumineuses déjà existantes dans le dispositif électronique, comme des diodes utilisées pour le rétro-éclairage d'un clavier, via un guide lumière, ou le rétro-éclairage de la fente d'insertion de la carte à mémoire,
- soit en association avec une ou plusieurs sources lumineuses non présentes dans le dispositif électronique mais ajoutées spécifiquement pour la mise en oeuvre de l'invention.

Ce ou ces capteurs étant reliés au module de sécurité du dispositif électronique peuvent transmettre à ce module de sécurité leurs mesures de l'intensité lumineuse dans le dispositif électronique, par exemple leurs mesures de luminance, et ainsi permettre la détection de variations non attendues ou non conformes de cette intensité lumineuse mesurée.

Ainsi, selon les différents modes de réalisation de l'invention, sa mise en oeuvre consiste uniquement en l'ajout de capteurs optiques, voire de sources lumineuses associées lorsqu'elles ne sont pas déjà présentes dans le dispositif électronique, et la programmation du module de sécurité pour qu'il traite les signaux reçus par les capteurs et puisse détecter un risque d'intrusion dans le dispositif électronique.

L'invention s'applique donc à la sécurisation de tout dispositif électronique comportant un module de sécurité, comme un terminal de paiement électronique, un clavier ou lecteur de carte indépendant...

Par exemple, le capteur appartient au groupe comprenant au moins :
- une photorésistance ;
- une photodiode ;
- un capteur de type DTC.

Selon une caractéristique particulière, la source lumineuse prédéterminée correspond à une diode électroluminescente.

Ainsi, l'invention, selon ce mode de réalisation, met en oeuvre au moins un capteur optique apte à détecter des variations d'intensité lumineuse associée à au moins une source lumineuse de type diode électroluminescente.

En effet, ce mode de réalisation permet notamment d'utiliser les sources lumineuses de ce type déjà implantées dans le dispositif électronique à sécuriser, pour une autre fonctionnalité, comme par exemple pour assurer le rétro-éclairage, via un guide lumière, du clavier. De ce fait, les capteurs optiques stratégiquement placés dans le dispositif électronique permettent notamment de détecter des intrusions visant à déplacer, remplacer ou détériorer/usiner le guide lumière afin d'insérer un ou plusieurs éléments espions au-dessus des touches du clavier, pour espionner les chiffres d'un code confidentiel saisis par un utilisateur.

Selon le même principe, ce mode de réalisation permet également d'utiliser les sources lumineuses de ce type déjà implantées dans le dispositif électronique à sécuriser pour assurer le rétro-éclairage de la fente d'insertion d'une carte à mémoire, afin de détecter notamment des intrusions visant à ajouter à ce niveau une tête de lecture pour explorer la piste magnétique de la carte une fois insérée et en extraire des données sensibles.

Enfin, si le dispositif électronique à sécuriser ne présente pas de moyens de rétro-éclairage, l'ajout de source(s) lumineuse(s) de type diode électroluminescente a pour avantage d'être peu coûteux et peu encombrant pour une mise en oeuvre optimale de l'invention.

Ce mode de réalisation s'applique non seulement à tout terminal de paiement électronique mais également à tout dispositif électronique pouvant être rattaché à un terminal de paiement électronique, comme par exemple un clavier ou un lecteur de carte indépendants et sécurisés, ainsi qu'à tout dispositif électronique pouvant être rattaché à un autre dispositif électronique (un clavier rattaché à un téléviseur ou une borne interactive...) et nécessitant une sécurisation des données traitées.

Selon un aspect particulier de l'invention, le capteur optique est soudé à un circuit imprimé dudit dispositif électronique et relié audit module de sécurité via un convertisseur analogique-numérique, qui peut physiquement faire partie du module de sécurité dudit dispositif électronique. Le convertisseur analogique-numérique est par exemple utilisé pour des capteurs de type photorésistances, qui n'émettent pas de signal numérique.

Ainsi, selon ce mode de réalisation de l'invention, le ou les capteurs optiques sont soudés au circuit imprimé du dispositif électronique, parmi les autres composants, et reliés au module de sécurité du dispositif électronique via un convertisseur analogique-numérique permettant le traitement des signaux reçus par le(s) capteur(s) optique(s).

Selon une caractéristique particulière de l'invention, le capteur optique est implanté dans le dispositif électronique à un emplacement choisi en fonction d'au moins un critère appartenant au groupe comprenant :
- une contribution d'au moins une source lumineuse prédéterminée interne au dispositif électronique ;
- un gradient de luminance autour de l'emplacement ;
- une contribution d'une source de lumière extérieure au dispositif électronique.

Ainsi, selon ce mode de réalisation de l'invention, l'emplacement du ou des capteurs optiques répond à une stratégie particulière de détection, permettant d'obtenir un compromis entre une détection optimale d'intrusion et une minimisation de fausses alertes de détection.

Par exemple, dans le cas où les sources lumineuses associées aux capteurs optiques correspondent aux leds utilisées pour rétro-éclairage du clavier, via un guide lumière, une stratégie de choix d'emplacement des capteurs va consister à tenir compte de la contribution de chaque led.

En effet, un emplacement judicieux d'un capteur correspond par exemple à un endroit où il n'est « soumis » à la contribution principale d'une seule led, de façon à ce qu'une variation d'intensité lumineuse mesurée par ce capteur puisse être facilement analysée comme un changement de contexte pour la led en question (usinage ou déplacement du guide lumière au-dessus de cette led par exemple). Si un tel emplacement n'est pas possible, il convient alors par exemple de placer un capteur à un endroit où il est soumis à une contribution « équilibrée » de plusieurs leds (50% d'intensité lumineuse due à chacune des deux leds proches du capteur). Une stratégie peut également consister à utiliser plusieurs capteurs à différents emplacements pour « équilibrer » les contributions de plusieurs leds et ainsi pouvoir analyser les variations d'intensité lumineuse propres à chaque led.

Selon un autre exemple, il est possible d'effectuer une simulation optique de luminance, en analysant la luminance mesurée par un plan-capteur optique placé au milieu du guide lumière, sur toute sa surface de façon à obtenir une simulation du gradient de luminance à chaque endroit du guide lumière. Le choix de l'emplacement du ou des capteurs dépend alors de ce gradient de luminance, sachant que plus le gradient de luminance est élevé à un endroit, plus le capteur optique placé à cet endroit sera sensible aux variations de luminance et aux mouvements du guide lumière par exemple. Ces emplacements de fort gradient de luminance sont donc à éviter.

Enfin, il est important de tenir compte, autant que faire ce peut, de l'influence de la lumière extérieure au dispositif électronique à sécuriser, qui est susceptible de varier sans aucun lien avec une intrusion quelconque dans le dispositif.

Selon un aspect particulier de l'invention, le système de détection comprend également un filtre infra-rouge ou Ultraviolet appliqué sur au moins une partie de la surface à sécuriser du dispositif électronique.

Ainsi, un tel filtre infra-rouge, ou ultraviolet, appliqué par exemple sur tout ou partie du clavier d'un terminal de paiement électronique, permet de limiter voire de s'affranchir complètement de l'influence de la lumière extérieure au terminal, tout en ne dégradant pas les performances du rétro-éclairage du clavier pour l'utilisateur du terminal. Pour ce faire, ce filtre est par exemple associé à des sources lumineuses et un détecteur lumineux infra rouge uniquement, dissociés du rétro-éclairage.

L'invention concerne également un procédé de détection d'une intrusion dans un dispositif électronique mettant en oeuvre un système de détection tel que décrit précédemment. Selon l'invention, un tel procédé de détection comprend une étape de détection optique d'une intrusion lorsqu'au moins une valeur absolue d'une différence entre :
- une intensité lumineuse mesurée par au moins un capteur optique et
- une intensité lumineuse de référence
excède un seuil prédéterminé.

Ainsi, selon ce mode de réalisation, une intrusion est détectée, dans le dispositif électronique ainsi sécurisé, lorsqu'une variation de l'intensité lumineuse mesurée par au moins un capteur optique excède un seuil prédéterminé, pouvant dépendre par exemple :
- du capteur optique en question ;
- du délai entre deux mesures (en effet, une variation rapide de luminance rend très probable une intrusion, ou une tentative d'intrusion) ;
- d'une tolérance tenant compte de critères tels que le vieillissement de la led associée au capteur, de l'empoussièrement du dispositif électronique ...

En particulier, l'étape de détection optique tient également compte d'un résultat de mesure supplémentaire de température et/ou d'intensité lumineuse issue d'un autre capteur.

Ainsi, lorsqu'un contrôle de la température est par exemple effectué par ailleurs au sein du dispositif électronique, également pour des raisons de sécurité, ces variations de température mesurée peuvent être corrélées avec les variations de l'intensité mesurées selon les différents modes de réalisation de l'invention.

Selon une caractéristique particulière de l'invention, le procédé comprend une étape de transmission d'au moins un signal aléatoire d'allumage/extinction ou un signal aléatoire de variation à destination d'au moins une des sources lumineuses internes au dispositif électronique et l'étape de détection optique tient compte du signal aléatoire transmis.

Ainsi, selon une première variante de réalisation, des signaux aléatoires, (alternances d'allumages et d'extinction long-courts, par exemple, ou au lieu d'une valeur 0 ou 1 d'éclairement, utilisation de valeurs intermédiaires) connus seulement du processeur du module de sécurité du dispositif électronique, peuvent être envoyés aux leds, et la correspondance avec les signaux reçus par le capteur peut être ainsi vérifiée. Cela permet notamment d'éviter à un pirate d'éblouir le capteur progressivement, puis de « shunter » le capteur par une résistance équivalente, ou encore d'espionner le signal de la photorésistance, pour le remplacer par un signal équivalent.

Selon une autre variante, il est prévu d'allumer les leds alternativement, ce qui conduit non seulement à des alternances allumés/éteints, mais aussi à des niveaux différents d'intensité lumineuse pour chaque capteur, lorsqu'ils dépendent d'une contribution de plusieurs leds notamment.

Selon un aspect particulier de l'invention, le procédé de détection comprend une étape de génération d'une alarme lorsqu'une intrusion est détectée lors de l'étape de détection optique, l'alarme étant d'un type appartenant au groupe comprenant au moins :
- le passage du dispositif électronique en mode « effraction » ;
- l'affichage d'un message d'alarme sur le dispositif électronique ;
- une combinaison des types d'alarme précédents.

Ainsi, lorsqu'une possible intrusion est détectée, l'alarme générée peut consister en un message sur le dispositif électronique ainsi sécurisé, lequel ne peut plus fonctionner « normalement » (par exemple, s'il s'agit d'un terminal de paiement électronique ou d'un accessoire rattaché à un terminal de paiement électronique, plus aucune transaction ne peut être effectuée). Par la suite, un tel dispositif électronique doit obligatoire être retourné à l'usine, à l'instar des techniques actuelles connues de sécurisation de terminaux de paiement électronique, comme par exemple les autres techniques de détections d'ouverture et de fraude.

Par exemple, le procédé comprend une étape de mémorisation d'au moins une valeur d'intensité lumineuse mesurée par au moins un capteur optique.

En particulier, le procédé de détection une étape de comparaison d'au moins une valeur d'intensité lumineuse mesurée par au moins un capteur avec au moins une valeur d'intensité lumineuse préalablement mémorisée.

Ainsi, ce mode de réalisation prévoit que les dernières mesures d'intensité des capteurs optiques avant l'extinction du terminal de paiement électronique soient pour enregistrées, de façon à pouvoir les comparer avec les premières mesures des capteurs optiques effectuées lors du redémarrage du dispositif électronique.

De cette manière, un écart important entre les mesures d'intensité prises avant l'extinction et après le redémarrage, font l'objet d'alerte, car il est alors très fortement probable que le dispositif électronique ait subit une tentative d'attaque, et que par exemple le guide lumière soit endommagé. En effet, l'attaque des « pucks » (ou fausses touches, pions de sécurité, détecteurs) nécessite d'usiner le guide lumière, et la pose d'un élément espion dans l'espace du guide lumière nécessite l'usinage, ou l'enlèvement du guide lumière.

De plus, cette mémorisation de valeurs d'intensité lumineuse préalablement mesurées permet d'assurer une grande fiabilité de détection, en permettant de tenir compte de critères d'usure des composants du dispositif électronique par exemple, afin de ne pas détecter d'intrusion en cas de variations faibles et/ou lentes de l'intensité lumineuse mesurée.

Par exemple, le procédé de détection est déclenché par un événement appartenant au groupe comprenant au moins :
- l'activation des mesures de sécurité du dispositif électronique ;
- chaque extinction du dispositif électronique ;
- chaque redémarrage du dispositif électronique ;
- périodiquement;
- avant une transaction sécurisée ;
- une combinaison d'au moins deux événements précédents.

L'invention concerne également un dispositif électronique comprenant au moins un système de détection d'une intrusion tel que décrit précédemment pour la mise en oeuvre du procédé de détection d'intrusion tel que décrit précédemment. Un tel dispositif électronique est par exemple un terminal de paiement électronique, un clavier indépendant, un lecteur de carte indépendant, ou tout autre dispositif électronique répondant à la même problématique de sécurisation.

L'invention concerne également un programme d'ordinateur téléchargeable depuis un réseau de communication et/ou stocké sur un support lisible par ordinateur et/ou exécutable par un microprocesseur, comprenant des instructions de code de programme pour l'exécution d'un procédé de détection tel que décrit précédemment, lorsque ce programme est exécuté par un processeur.

L'invention concerne enfin un support d'enregistrement lisible par un ordinateur sur lequel est enregistré un programme d'ordinateur comprenant des instructions pour l'exécution des étapes du procédé de détection tel que décrit précédemment.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un exemple de schéma d'un système de détection d'intrusion selon un mode de réalisation particulier de l'invention ;
- la figure 2 présente un exemple de guide lumière mise en oeuvre dans un terminal de paiement électronique comprenant un système tel qu'illustré en figure 1, selon un mode de réalisation particulier de l'invention ;
- la figure 3 présente un exemple de simulation optique de la luminance mesurée par un capteur optique plan pour un guide lumière tel qu'illustré en figure 2, selon un mode de réalisation particulier de l'invention ;
- la figure 4 illustre les principales étapes du procédé de détection d'intrusion, selon un mode de réalisation de l'invention ;
- les figures 5 et 6 illustrent deux exemples d'architecture simplifiée d'un système ou module de détection d'intrusion, selon un mode de réalisation particulier de l'invention.

### 5. Description

### 5.1. Principe général

Le principe général de l'invention consiste à utiliser des capteurs optiques pour détecter une intrusion potentielle dans un dispositif électronique grâce à la détection de variations non conformes de l'intensité lumineuse dans le dispositif électronique en question.

Pour ce faire, l'invention, selon ces différents modes de réalisation, met en oeuvre au moins un capteur optique, relié au module de sécurité du dispositif électronique, configurés pour détecter des variations d'intensité lumineuse non conformes par rapport à une intensité lumineuse associée à au moins une source lumineuse interne au dispositif électronique.

Un tel dispositif électronique correspond par exemple à un terminal de paiement électronique, ou un accessoire de paiement (clavier ou lecteur de carte indépendants rattachés à un terminal de paiement électronique), ou encore un clavier sécurisé indépendant pouvant par exemple être rattaché à un autre dispositif dans la cadre d'une application de télévision payante ...

La suite de la description s'attache à décrire l'invention pour un terminal de paiement électronique, mais il est entendu que l'invention ne se limite pas à un tel dispositif et peut s'appliquer notamment à tout dispositif électronique confronté à la même problématique de sécurisation et devant donc faire l'objet de mesures de sécurité particulières liées notamment à la nature sensible des données traitées par ce dispositif électronique, comme par exemple des données saisies sur un clavier (code confidentiel pour une transaction financière électronique, ou pour une connexion sécurisée ou un accès sécurisé à un bâtiment ou un service) ou des données lues d'une carte (à puce, à piste magnétique) ... via un lecteur de carte.

Ainsi, l'invention, selon ses différents modes de réalisation, tire parti du constat suivant : les intrusions les plus fréquentes actuellement dans les terminaux de paiement électronique, via leur clavier ou un clavier y rattaché, ont pour conséquence de modifier le cheminement des rayons lumineux à l'intérieur du terminal (ou plus particulièrement du clavier), du fait de la dégradation, du déplacement, du retrait ou même de l'ajout de composants dans le terminal (par exemple, la présence de colle sur une surface optique change considérablement le comportement des rayons lumineux). Une détection optique d'une intrusion peut donc être mise en oeuvre de manière simple et peu coûteuse par l'ajout de capteurs optiques.

De plus, la plupart des terminaux de paiement actuels bénéficient d'une fonctionnalité consistant à améliorer l'ergonomie du clavier via un rétro-éclairage, assuré à la fois par une pluralités de sources lumineuses implantées sur le circuit imprimé du terminal et un guide lumière intégré au clavier du terminal. Certains terminaux de paiement actuels bénéficient également d'une fonctionnalité équivalente consistant à améliorer l'ergonomie du lecteur de carte à puce via un rétro-éclairage de la fente d'insertion de la carte à puce, assuré par au moins une source lumineuse implantée sur le circuit imprimé du terminal à proximité de cette fente. Ainsi, des sources lumineuses internes au terminal sont le plus souvent déjà présentes pour assurer ces fonctionnalités de rétro-éclairage et peuvent être associées aux capteurs optiques de l'invention pour détecter des intrusions via la détection de variations non conformes d'intensité lumineuse par rapport à une intensité lumineuse de référence relative à au moins une source lumineuse interne au terminal.

Enfin, nous décrirons plus particulièrement un mode de réalisation basée sur la détection de variation de mesures de luminance effectuées par un ou plusieurs capteurs optiques, bien que l'expression « intensité lumineuse » soit le plus souvent utilisée. Ainsi, la grandeur physique mesurée par le ou les capteurs, selon les différents modes de réalisation de l'invention, peut correspondre à une luminance, ou toute autre grandeur permettant d'obtenir les mêmes résultats de détection optique.

Ainsi, l'invention, selon ses différents modes de réalisation, permet de s'affranchir d'inconvénients tels que le vieillissement dû aux contacts, les capteurs et sources lumineuses utilisés ne nécessitant pas de contact (mis à part les contacts sur le circuit imprimé du terminal de paiement électronique) pour la mise en oeuvre de la détection optique.

L'invention permet également, selon ses différents modes de réalisation, de complémenter, voire de s'affranchir de sérigraphier des « FPC » (de l'anglais « Flexible Printed Circuit », pour circuit imprimé flexible) ou d'avoir des pièces en compression, comme dans certaines techniques de l'art antérieur.

Par ailleurs, l'invention, selon ses différents modes de réalisation, permet également de réduire le nombre de fausses touches de sécurité à mettre en oeuvre, et donc de réduire les pressions continues sur le produit, la détection optique renforçant notablement le niveau de sécurité.

### 5.2. Description d'un mode de réalisation

### 5.2.1 Exemple de système de détection d'intrusion

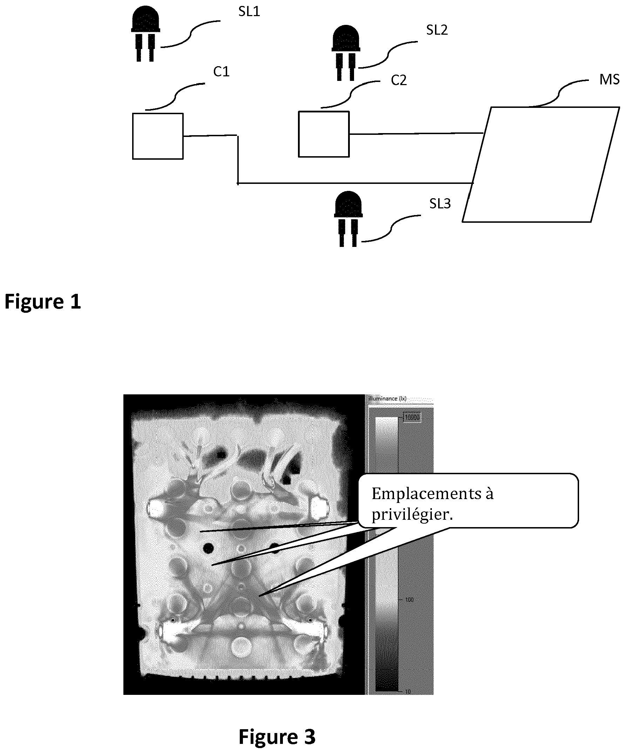

On décrit maintenant, en relation avec la figure 1, un premier mode de réalisation de l'invention, sous la forme d'un système de détection d'intrusion comprenant par exemple deux capteurs optiques C1 et C2, associés à trois sources lumineuses SL1, SL2 et SL3. Ce système de détection d'intrusion est par exemple implanté sur le circuit imprimé d'un terminal de paiement électronique, d'un clavier sécurisé indépendant, d'un lecteur de carte (à puce ou à piste magnétique) sécurisé indépendant...

Les deux capteurs optiques sont reliés au module de sécurité MS, de façon à ce que les signaux qu'ils reçoivent puissent être traités et analysés, par le module de sécurité MS, pour détecter de possibles intrusions dans le terminal de paiement électronique, et également ajuster les valeurs en fonction des événements (vieillissement des leds, empoussièrement, ...).

Par exemple, les deux capteurs optiques sont des photorésistances, émettant une résistance proportionnelle au signal reçu. Cette valeur analogique est donc ensuite transmise au microprocesseur du module de sécurité, via un convertisseur analogique-numérique par exemple.

Il est également possible d'utiliser des capteurs de types photodiodes.

Un troisième type de capteur est un capteur type caméra, ou DTC (pour « Dispositif à transfert de Charge » ou CCD en anglais pour «Charge-Coupled Device »), qui, en plus de l'information « intensité », peut compléter par une information de type « longueur d'onde », ce qui peut le rendre moins sensible à la lumière extérieure. Ce capteur a aussi l'avantage de pouvoir émettre un signal numérique, permettant ainsi de s'affranchir de l'ajout d'un convertisseur analogique-numérique

Enfin, on peut utiliser tout autre capteur de lumière qui permettra de remonter une information d'intensité lumineuse.

Les trois sources lumineuses SL1 à SL3 correspondent quant à elles par exemple à des diodes électroluminescentes implantées sur le circuit imprimé du terminal de paiement électronique pour assurer un rétro-éclairage du clavier, via l'utilisation conjointe d'un guide lumière.

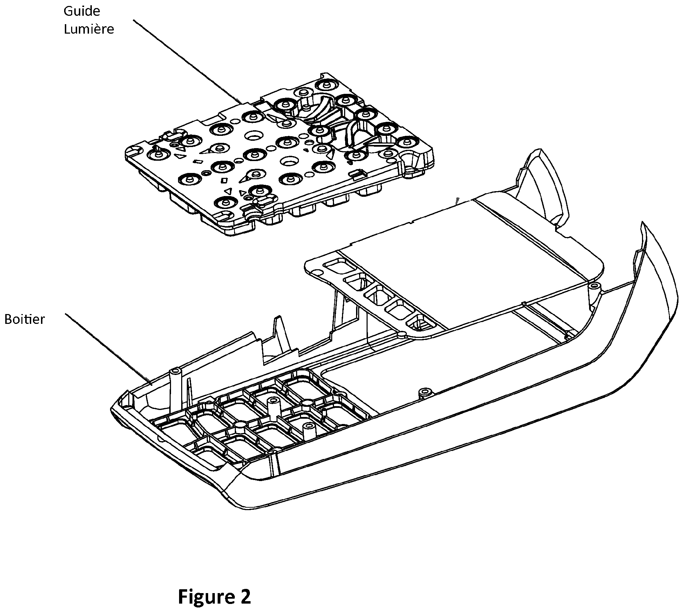

Par exemple, un tel guide lumière est illustré en figure 2, en dessous d'un boitier d'un terminal de paiement électronique. Un tel guide lumière est destiné à propager de manière optimale la lumière émise par les diodes, dans toutes les touches du clavier, de façon à rétro-éclairer de manière ergonomique et uniforme le clavier, pour un utilisateur.

La figure 3 illustre (en niveaux de gris) une simulation optique montrant la densité de rayon lumineux dans un guide lumière (c'est-à-dire la luminance en grandeur optique). Pour obtenir une telle simulation, un « capteur virtuel » optique plan est positionné sous le guide lumière, sur tout ou partie, et mesure les rayons lumineux qui le traversent, dans les deux sens (de l'intérieur du terminal de paiement électronique vers l'extérieur et vice versa).

Une telle simulation permet, dans son utilisation traditionnelle, de simuler l'éclairage des touches pour travailler les formes du guide lumière et optimiser l'homogénéité de l'éclairage pour l'utilisateur.

Dans ce cas d'utilisation, la simulation permettra également de choisir judicieusement/stratégiquement les emplacements des capteurs optiques, de façon à ce que la détection optique d'une intrusion soit optimale (compromis entre fort taux de détection d'intrusion réelle et faible taux de fausse détection).

Ainsi, le ou les capteurs sont placés :
- de façon à ce que les déplacements relatifs du guide lumière et du capteur (par exemple au moment du montage du terminal de paiement électronique, ou lors de chute du terminal de paiement électronique) soient peu sensibles. Pour ce faire, il faut choisir par exemple un emplacement où le gradient de luminance (sur la simulation) n'est pas être trop élevé sur une plage de quelques millimètres. Par exemple, sur la figure 3, ces emplacements à privilégier sont identifiés ;
- de façon à ce que, lorsque cela est possible, chaque led contribue à l'éclairement de chaque capteur. Par exemple, sur la figure 1, on peut supposer que le capteur optique C1 est principalement sensible à l'intensité lumineuse émise par la seule source lumineuse SL1;
- de façon à ce que, lorsqu'il n'est pas possible que chaque led contribue à l'éclairement de chaque capteur avec peu d'influence de la lumière extérieure, un capteur soit sensible à une contribution équilibrée de plusieurs sources lumineuses. Par exemple, sur la figure 1, on peut supposer que le capteur optique C2 est sensible à l'intensité lumineuse émise par les deux sources lumineuses SL2 et SL3, à parts égales ;
- en minimisant l'influence de la lumière extérieure, qui est susceptible de varier sans pour autant être synonyme d'intrusion dans le terminal de paiement électronique. Pour ce faire, il est possible d'appliquer, sur tout ou partie du clavier du terminal, un filtre infra-rouge permettant de limiter voire de s'affranchir complètement de l'influence de la lumière extérieure au terminal, tout en ne dégradant pas les performances du rétro-éclairage du clavier pour l'utilisateur du terminal. Dans ce cas, sous le filtre infra-rouge, il est également possible d'ajouter une source infra-rouge spécifique, et un ou plusieurs détecteurs infra-rouge, de façon à être totalement isolé de l'extérieur. La mesure pourrait se faire en éteignant les sources lumineuses d'éclairage clavier. Pour limiter l'influence de la lumière extérieure, un capteur peut mesurer la lumière extérieure, et prendre en compte cette mesure dans les calculs de comparaison.

D'autres éléments peuvent bien sûr être considérés pour le placement des capteurs optiques, avec pour objectif que les mesures de luminance permettent de manière optimale de détecter une intrusion dans le terminal de paiement électronique.

Le fait d'avoir plusieurs capteurs peut aussi permettre d'assurer une vérification : si une valeur, donnée, par un capteur, baisse de façon significative, alors qu'un autre capteur, sensé mesurer la même source lumineuse, n'a pas baissé, cela présage d'une tentative de fraude.

De même, si le terminal de paiement électronique à sécuriser ne présente pas de sources lumineuses internes (par exemple parce qu'il n'offre pas la fonctionnalité de rétro-éclairage du clavier ou de la fente d'insertion de la carte à puce), des sources lumineuses spécifiques à l'invention sont ajoutées, en association avec les capteurs optiques mis en oeuvre.

Enfin, le choix de l'emplacement du ou des capteurs optiques permet de paramétrer le procédé de détection optique de façon à tenir compte du contexte spécifique de mise en oeuvre du système de détection optique. On décrit maintenant donc plus précisément la mise en oeuvre du procédé de détection optique, selon ce mode de réalisation de l'invention.

Selon d'autres variantes, une source lumineuse peut correspondre à une source incandescente, un néon...

### 5.2.2 Exemple de procédé de détection d'intrusion

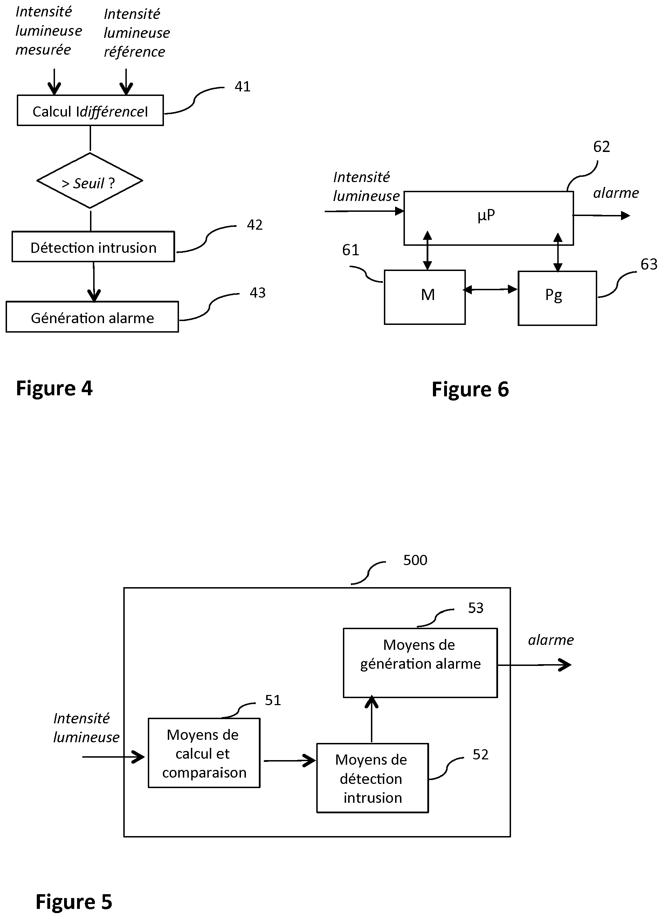

La figure 4 en illustre les principales étapes, pour un capteur optique donné, sachant que ce procédé de détection optique peut être mis en oeuvre quel que soit le nombre de capteurs optiques utilisés, et peut corréler les résultats obtenus pour chaque capteur optique de manière à optimiser la détection d'intrusion. Ces principales étapes sont par exemple mises en oeuvre par le module de sécurité du terminal de paiement électronique, ou un module associé, à partir des signaux reçus et transmis par le ou les capteurs optiques.

Le procédé de détection comprend donc une première étape de calcul 41 d'une valeur absolue d'une différence entre une intensité lumineuse, ou luminance, mesurée par un capteur optique et une intensité lumineuse, ou luminance, de référence. Cette luminance de référence peut être associée à une ou plusieurs sources lumineuses, peut tenir compte de l'influence de la lumière extérieure (par exemple via l'utilisation d'un capteur supplémentaire mesurant la lumière extérieure) ou d'autres critères encore.

De plus, à chaque mesure, l'intensité de référence peut être recalculée, soit en prenant directement la dernière valeur mesurée, soit en utilisant les n dernière valeurs mesurées avec leur horodatage, puis en lissant avec une moyenne mobile ou « glissante », de façon par exemple à pouvoir tenir compte de critères tels que le vieillissement ou l'empoussièrement du guide lumière ou des leds ... Ainsi, des algorithmes de comparaison, tenant compte des mesures d'intensité déjà effectuées, sont mis en oeuvre, afin d'assurer la fiabilité de la détection d'intrusion.

Une comparaison avec un seuil prédéterminé est ensuite mise en oeuvre, de façon à déterminer si la variation de luminance calculée excède ou non ce seuil.

Si c'est le cas, une intrusion est alors détectée lors d'une étape de détection d'une intrusion 42 et suivie par une étape de génération d'une alarme 43.

Selon des variantes de réalisation, le résultat de comparaison est interprété de différentes manières, par exemple lorsqu'il doit être corrélé avec d'autres paramètres tels que le résultat d'un contrôle de température mis en oeuvre de manière distincte, le résultat du procédé de détection relatif à un ou plusieurs autres capteurs, un paramètre temporel permettant de détecter uniquement des variations rapides de luminance et d'écarter des variations lentes plutôt attribuables à un fonctionnement normal d'un terminal de paiement électronique (vieillissement ou empoussièrement du guide lumière ou des leds ...), ...

De même, le seuil de comparaison permettant de détecter ou non une possible intrusion dans le terminal de paiement électronique dépend d'une pluralité de paramètres tels que l'emplacement du capteur ou le pourcentage de contribution des sources lumineuses associées.

Par ailleurs, le procédé de détection, selon ce mode de réalisation de l'invention, peut être mis en oeuvre par exemple à l'activation des mesures de sécurité du terminal de paiement électronique, de façon à optimiser la sécurité du terminal de paiement électronique lors de son utilisation.

De même, le procédé peut être mis en oeuvre à chaque extinction du terminal et à chaque redémarrage du terminal, de façon à détecter principalement les intrusions intervenues hors des périodes d'utilisation du terminal de paiement électronique. En effet, les intrusions nécessitant le démontage d'un terminal de paiement électronique sont rarement possibles pendant son utilisation, et interviennent souvent après un vol de ce terminal de paiement électronique et une remise en service une fois l'intrusion effectuée. De ce fait, le procédé de détection selon ce mode de réalisation prévoit de mémoriser, à chaque extinction du terminal de paiement électronique, les mesures de luminance effectuées par le ou les capteurs, de façon à les comparer avec les premières mesures effectuées au redémarrage du terminal de paiement électronique.

Enfin, le procédé de détection peut être exécuté périodiquement, au cours de l'utilisation du terminal de paiement électronique, afin de détecter des intrusions même lorsque le terminal de paiement électronique est allumé. Une fois une intrusion détectée, selon le mode de réalisation décrit ci-dessus, une alarme est donc générée, de façon à passer le terminal en mode « effraction ». Par exemple, l'alarme générée peut consister en un message sur le terminal, sur lequel plus aucune transaction ne peut être effectuée. Par la suite, un tel terminal doit obligatoire être retourné à l'usine, à l'instar des techniques actuelles connues de sécurisation de terminaux de paiement électronique, comme par exemple les autres techniques de détections d'ouverture et de fraude.

### 5.3. Variantes de réalisation

Selon certaines variantes de réalisation, les mesures de luminance effectuées par les capteurs optiques sont soumises à des variations volontaires de l'éclairement des sources lumineuses associées, de façon à sécuriser la détection optique selon l'invention.

Par exemple, selon une première variante de réalisation, des signaux aléatoires, (alternances d'allumages et d'extinction « long-court », par exemple) connus seulement du processeur du module de sécurité du terminal de paiement électronique, peuvent être envoyés aux leds, et la correspondance avec les signaux reçus par le capteur peut être ainsi vérifiée. Cela permet notamment d'éviter à un pirate d'éblouir le capteur progressivement, par l'utilisation d'une source de lumière supplémentaire, puis de « shunter » le capteur par une résistance équivalente, ou encore d'espionner le signal émis par la photorésistance, pour le remplacer par un signal équivalent. En effet, ce signal émis étant différent selon les signaux aléatoires non prédictifs émis par les leds, il n'est pas possible de le « simuler ».

Selon une autre variante, il est prévu d'allumer les leds alternativement, ce qui conduit non seulement à des alternances d'allumages et d'extinction, mais aussi à des niveaux différents d'intensité lumineuse pour chaque capteur, notamment lorsqu'ils dépendent d'une contribution de plusieurs leds. Cela est particulièrement utile, si plusieurs versions de guide lumière sont utilisées en parallèle. La répartition de la lumière est alors différente selon le guide lumière, et il sera difficile pour un « espion », de remplacer par un autre guide lumière (différence minime de définition, ou empoussièrement, différent, etc...).

### 5.4. Architecture simplifiée d'un module de détection d'intrusion

On décrit, en relation avec les figures 5 et 6, un exemple de système de détection d'intrusion, comprenant des moyens d'exécution du procédé décrit préalablement (notamment des moyens de calcul et de comparaison 51, des moyens de détection d'intrusion 52 et des moyens de génération d'alarme 53).

Ainsi, comme illustré en figure 5, un tel système 500, ou module 500, intégré par exemple au circuit imprimé d'un dispositif électronique, comprend au moins un capteur optique (C1) relié à au moins un module de sécurité (MS) du dispositif électronique, le capteur optique et le module de sécurité étant configurés pour détecter une variation d'intensité lumineuse mesurée par le capteur optique par rapport à une intensité lumineuse de référence associée à au moins une source lumineuse (SL1) prédéterminée interne au dispositif électronique, la variation d'intensité lumineuse étant représentative d'un risque d'intrusion dans le dispositif électronique

On décrit maintenant ce système 500, encore appelé module de détection, en relation avec la figure 6.

Par exemple, le module comprend une mémoire 61 constituée d'une mémoire tampon, une unité de traitement 62, équipée par exemple d'un microprocesseur, et pilotée par le programme d'ordinateur 63, mettant en oeuvre un procédé de détection d'intrusion selon les différents modes de réalisation décrit précédemment.

À l'initialisation, les instructions de code du programme d'ordinateur 63 sont par exemple chargées dans une mémoire avant d'être exécutées par le processeur de l'unité de traitement 62. L'unité de traitement 62 reçoit en entrée par exemple une valeur mesurée d'intensité lumineuse (par exemple une mesure de luminance) et au moins une valeur d'intensité lumineuse (par exemple une mesure de luminance) de référence. Le microprocesseur de l'unité de traitement 62 met en oeuvre les étapes du procédé de détection d'intrusion, selon les instructions du programme d'ordinateur 63, pour générer une alarme.

Il est à noter que les valeurs d'intensité mesurées, ainsi que les valeurs de référence, sont stockées dans une zone mémoire sécurisée, afin d'éviter qu'un « espion » puisse exploiter ces données.

## Revendications

1. Système de détection d'une intrusion dans un dispositif électronique, ledit système comprenant au moins un capteur optique (C1) relié à au moins un module de sécurité (MS) dudit dispositif électronique, ledit capteur optique et ledit module de sécurité étant configurés pour détecter une variation d'intensité lumineuse mesurée par ledit capteur optique par rapport à une intensité lumineuse de référence associée à au moins une source lumineuse (SL1) prédéterminée interne audit dispositif électronique, ladite au moins une source lumineuse (SL1) assurant le rétro-éclairage du clavier et/ou de la fente d'insertion de la carte dudit dispositif électronique, ladite variation d'intensité lumineuse étant représentative d'un risque d'intrusion dans ledit dispositif électronique,
et ledit dispositif électronique comprenant au moins un module de sécurité (MS) et des moyens de transmission d'au moins un signal aléatoire d'allumage/extinction ou un signal aléatoire de variation à destination d'au moins ladite source lumineuse, ladite détection optique mise en oeuvre par ledit capteur optique et ledit module de sécurité tenant compte du signal aléatoire transmis.

2. Système de détection d'une intrusion selon la revendication 1, **caractérisé en ce que** ledit au moins un capteur appartient au groupe comprenant au moins :
• une photorésistance ;
• une photodiode ;
• un capteur de type DTC.

3. Système de détection d'une intrusion selon la revendication 1, **caractérisé en ce que** ladite au moins une source lumineuse prédéterminée correspond à une diode électroluminescente.

4. Système de détection d'une intrusion selon la revendication 1, **caractérisé en ce que** ledit au moins un capteur optique est implanté dans ledit dispositif électronique à un emplacement choisi en fonction d'au moins un critère appartenant au groupe comprenant :
• une contribution d'au moins une source lumineuse prédéterminée interne audit dispositif électronique ;
• un gradient de luminance autour dudit emplacement ;
• une contribution d'une source de lumière extérieure audit dispositif électronique.

5. Système de détection d'une intrusion selon la revendication 1, **caractérisé en ce qu'**il comprend également un filtre infra-rouge ou Ultraviolet appliqué sur au moins une partie de la surface à sécuriser dudit dispositif électronique

6. Procédé de détection d'une intrusion dans un dispositif électronique mettant en oeuvre un système de détection selon la revendication 1, le procédé comprenant une étape de détection optique d'une intrusion lorsqu'au moins une valeur absolue d'une différence entre :
• une intensité lumineuse mesurée par ledit au moins un capteur optique et
• une intensité lumineuse de référence
excède un seuil prédéterminé,
et comprenant une étape de transmission d'au moins un signal aléatoire d'allumage/extinction ou un signal aléatoire de variation à destination d'au moins une desdites sources lumineuses internes audit dispositif électronique, lesdites sources lumineuses internes assurant le rétro-éclairage du clavier et/ou de la fente d'insertion de la carte dudit dispositif électronique, et en ce que ladite étape de détection optique tient compte du signal aléatoire transmis

7. Procédé de détection d'une intrusion selon la revendication 6, **caractérisé en ce que** ladite étape de détection optique tient également compte d'un résultat de mesure supplémentaire de température et/ou d'intensité lumineuse issue d'un autre capteur.

8. Procédé de détection d'une intrusion selon la revendication 6, **caractérisé en ce qu'**il comprend une étape de génération d'une alarme lorsqu'une intrusion est détectée lors de ladite étape de détection optique, ladite alarme étant d'un type appartenant au groupe comprenant au moins :
• le passage dudit dispositif électronique en mode « effraction » ;
• l'affichage d'un message d'alarme sur ledit dispositif électronique ;
• une combinaison des types d'alarme précédents.

9. Procédé de détection d'une intrusion selon la revendication 6, **caractérisé en ce qu'**il comprend une étape de mémorisation d'au moins une valeur d'intensité lumineuse mesurée par au moins un capteur optique.

10. Procédé de détection d'une intrusion selon la revendication 6, **caractérisé en ce qu'**il comprend une étape de comparaison d'au moins une valeur d'intensité lumineuse mesurée par au moins un capteur avec au moins une valeur d'intensité lumineuse préalablement mémorisée.

11. Procédé de détection d'une intrusion selon la revendication 6, **caractérisé en ce qu'**il est déclenché par un événement appartenant au groupe comprenant au moins :
• l'activation des mesures de sécurité dudit dispositif électronique ;
• chaque extinction dudit dispositif électronique ;
• chaque redémarrage dudit dispositif électronique ;
• périodiquement;
• avant une transaction sécurisée ;
• une combinaison d'au moins deux événements précédents.

12. Dispositif électronique comprenant au moins un système de détection d'une intrusion selon la revendication 1 pour la mise en oeuvre du procédé de détection d'intrusion selon la revendication 6.

13. Programme d'ordinateur téléchargeable depuis un réseau de communication et/ou stocké sur un support lisible par ordinateur et/ou exécutable par un microprocesseur, le programme d'ordinateur comprenant des instructions de code de programme pour l'exécution d'un procédé selon l'une quelconque des revendications 6 à 12 lorsque ce programme est exécuté par un processeur.

14. Support d'enregistrement lisible par un ordinateur sur lequel est enregistré un programme d'ordinateur comprenant des instructions pour l'exécution des étapes du procédé selon l'une quelconque des revendications 6 à 12.

## Patentansprüche

1. System zum Erfassen eines Einbruchs in eine elektronische Vorrichtung, **dadurch gekennzeichnet, dass** es mindestens einen optischen Sensor (C1) umfasst, der mit mindestens einem Sicherheitsmodul (MS) der elektronischen Vorrichtung verbunden ist, wobei der optische Sensor und das Sicherheitsmodul konfiguriert sind, um eine Lichtstärkenvariation zu erfassen, die von dem optischen Sensor in Bezug auf eine Referenzlichtstärke, die mit mindestens einer vorbestimmten Lichtquelle (SL1) innerhalb der elektronischen Vorrichtung assoziiert ist, gemessen wird, wobei die mindestens eine Lichtquelle (SL1) die Hintergrundbeleuchtung der Tastatur und/oder des Einfügeschlitzes der Karte der elektronischen Vorrichtung sicherstellt, wobei die Lichtstärkenvariation für eine Gefahr eines Einbruchs in die elektronische Vorrichtung repräsentativ ist,
und dass die elektronische Vorrichtung Mittel zum Übertragen mindestens eines zufälligen Einschalt-/Ausschalt-Signals oder eines zufälligen Variationssignals zu der mindestens einen Lichtquelle umfasst, wobei die optische Erfassung von dem optischen Sensor umgesetzt wird und das Sicherheitsmodul das übertragene zufällige Signal berücksichtigt.

2. System zum Erfassen eines Einbruchs nach Anspruch 1, **dadurch gekennzeichnet, dass** der mindestens eine Sensor der Gruppe angehört, die mindestens Folgende umfasst:
• einen Fotowiderstand;
• eine Fotodiode ;
• einen Sensor vom Typ DTC.

3. System zum Erfassen eines Einbruchs nach Anspruch 1, **dadurch gekennzeichnet, dass** die mindestens eine vorbestimmte Lichtquelle einer Licht emittierenden Diode entspricht.

4. System zum Erfassen eines Einbruchs nach Anspruch 1, **dadurch gekennzeichnet, dass** der mindestens eine optische Sensor in der elektronischen Vorrichtung an einer Stelle implantiert ist, die in Abhängigkeit von mindestens einem Kriterium ausgewählt ist, das zu der Gruppe gehört, die Folgende umfasst:
• einen Beitrag mindestens einer vorbestimmten Lichtquelle innerhalb der elektronischen Vorrichtung;
• einen Luminanzgradienten um die Stelle;
• einen Beitrag einer Lichtquelle außerhalb der elektronischen Vorrichtung.

5. System zum Erfassen eines Einbruchs nach Anspruch 1, **dadurch gekennzeichnet, dass** es auch ein Infrarot- oder Ultraviolettfilter umfasst, das auf mindestens einen Teil der abzusichernden Oberfläche der elektronischen Vorrichtung angewandt ist.

6. Verfahren zum Erfassen eines Einbruchs in eine elektronische Vorrichtung, die ein Erfassungssystem nach Anspruch 1 umsetzt, **dadurch gekennzeichnet, dass** es einen Schritt des optischen Erfassens eines Einbruchs umfasst, wenn mindestens ein Absolutwert eines Unterschieds zwischen:
• einer Lichtstärke, die von dem mindestens einen optischen Sensor gemessen wird, und
• eine Referenzlichtstärke
einen vorbestimmten Schwellenwert überschreitet,
und dass es einen Schritt des Übertragens mindestens eines zufälligen Einschalt-/Ausschalt-Signals oder eines zufälligen Variationssignals zu mindestens einer der Lichtquellen innerhalb der elektronischen Vorrichtung umfasst, wobei die internen Lichtquellen die Hintergrundbeleuchtung der Tastatur und/oder des Einfügeschlitzes der Karte der elektronischen Vorrichtung sicherstellen, und dass der optische Erfassungsschritt das übertragene zufällige Signal berücksichtigt.

7. Verfahren zum Erfassen eines Einbruchs nach Anspruch 6, **dadurch gekennzeichnet, dass** der Schritt des optischen Erfassens auch ein zusätzliches Messresultat der Temperatur und/oder Leuchtstärke, die aus einem anderen Sensor kommt, berücksichtigt.

8. Verfahren zum Erfassen eines Einbruchs nach Anspruch 6, **dadurch gekennzeichnet, dass** es einen Schritt des Erzeugens eines Alarms umfasst, wenn ein Einbruch bei dem Schritt der optischen Erfassung erfasst wird, wobei der Alarm von einem Typ ist, der zu der Gruppe gehört, die mindestens Folgende umfasst: :
• das Übergehen der elektronischen Vorrichtung auf einen Modus "Einbruch";
• das Anzeigen einer Fehlermeldung auf der elektronischen Vorrichtung;
• eine Kombination der vorhergehenden Alarmtypen.

9. Verfahren zum Erfassen eines Einbruchs nach Anspruch 6, **dadurch gekennzeichnet, dass** es einen Schritt des Speicherns mindestens eines Lichtstärkewerts, der von mindestens einem optischen Sensor gemessen wird, umfasst.

10. Verfahren zum Erfassen eines Einbruchs nach Anspruch 6, **dadurch gekennzeichnet, dass** es einen Schritt des Vergleichens mindestens eines Leuchtstärkewerts, der von mindestens einem Sensor gemessen wird, mit mindestens einem vorab gespeicherten Leuchtstärkewert umfasst.

11. Verfahren zum Erfassen eines Einbruchs nach Anspruch 6, **dadurch gekennzeichnet, dass** es von einem Ereignis ausgelöst wird, das zu der Gruppe gehört, die mindestens Folgende umfasst:
• das Aktivieren der Sicherheitsmaßnahmen der elektronischen Vorrichtung ;
• jedes Erlöschen der elektronischen Vorrichtung;
• jedes Neustarten der elektronischen Vorrichtung;
• periodisch;
• vor einer gesicherten Transaktion;
• eine Kombination von mindestens zwei vorhergehenden Ereignissen.

12. Elektronische Vorrichtung, die mindestens ein Erfassungssystem eines Einbruchs nach Anspruch 1 für die Umsetzung des Einbruchserfassungsverfahrens nach Anspruch 6 umfasst. 6.

13. Computerprogramm, das aus einem Kommunikationsnetzwerk heruntergeladen werden kann und/oder auf einem computerlesbaren und/oder von einem Mikroprozessor ausführbaren Träger gespeichert ist, **dadurch gekennzeichnet, dass** es Anweisungen dieses Programmcodes zur Ausführung eines Verfahrens nach einem der Ansprüche 6 bis 12 umfasst, wenn dieses Programm von einem Prozessor ausgeführt wird.

14. Computerlesbarer Aufzeichnungsträger, auf dem ein Computerprogramm aufgezeichnet ist, das Anweisungen zur Ausführung der Schritte des Verfahrens nach einem der Ansprüche 6 bis 12 umfasst.

## Claims

1. System for detecting an intrusion in an electronic device, said system comprising at least one optical sensor (C1) connected to at least one security module (MS) of the electronic device, said optical sensor and said security module being configured to detect a variation in light intensity measured by said optical sensor as compared with a reference light intensity associated with at least one pre-determined light source (SL1) inside said electronic device, said at least one light source (SL1) carrying out the back-lighting of the keypad and/or of the insertion slot for the card of said electronic device, said variation in light intensity representing a risk of intrusion into said electronic device,
and said electronic device comprising at least one security module (MS) and means for transmitting at least one random on/off signal or a random variation signal intended for at least said light source, said optical detection implemented by said optical sensor and said security module taking account of the random signal transmitted.

2. System for detecting an intrusion according to claim 1, **characterized in that** said at least one sensor belongs to the group comprising at least:
• one photo-resistor;
• one photodiode;
• one CCD type sensor.

3. System for detecting an intrusion according to claim 1, **characterized in that** said at least one pre-determined light source corresponds to a light-emitting diode.

4. System for detecting an intrusion according to claim 1, **characterized in that** said at least one optical sensor is implanted in said electronic device at a location chosen on the basis of at least one criterion belonging to the group comprising:
• a contribution of at least one pre-determined light source inside said electronic device;
• a gradient of luminance around said location;
• a contribution from a light source external to said electronic device.

5. System for detecting an intrusion according to claim 1, **characterized in that** it also comprises an infrared filter or ultraviolet filter applied to at least one part of the surface to be secured of said electronic device.

6. Method for detecting an intrusion into an electronic device implementing a system of detection according to claim 1, the method comprising a step of optical detection of an intrusion when at least one absolute value of a difference between:
• a light intensity measured by at least one optical sensor and
• a reference light intensity
exceeds a pre-determined threshold,
and in comprising a step of transmission of at least one random on/off signal or a random variation intended for at least one of said light sources inside said electronic device, said internal light sources carrying out the back-lighting of the keypad and/or of the insertion slot for the card of said electronic device, and in that said step of optical detection takes account of said random signal transmitted.

7. Method for detecting an intrusion according to claim 6, **characterized in that** said step of optical detection also takes account of a result of an additional measurement of temperature and/or light intensity coming from another sensor.

8. Method for detecting an intrusion according to claim 6, **characterized in that** it comprises a step for generating an alarm when an intrusion is detected during said step of optical detection, said alarm being of a type belonging to the group comprising at least:
• the passage of said electronic device into "infringement" mode;
• the display of an alarm message on said electronic device;
• a combination of the above types of alarms.

9. Method for detecting an intrusion according to claim 6, **characterized in that** it comprises a step for memorizing at least one value of light intensity measured by at least one optical sensor.

10. Method for detecting an intrusion according to claim 6, **characterized in that** it comprises a step for comparing at least one value of light intensity measured by at least one sensor with at least one preliminarily memorized value of light intensity.

11. Method for detecting an intrusion according to claim 6, **characterized in that** it is activated by an event belonging to the group comprising at least:
• the activation of the measurements of security of said electronic device;
• each action for turning said electronic device off;
• each restarting of said electronic device;
• periodic events;
• before a secured transaction;
• a combination of at least two of the above events.

12. Electronic device comprising at least one system for detecting an intrusion according to claim 1 for implementing the method for detecting intrusion according to claim 6.

13. Computer program downloadable from a communications network and/or stored on a medium readable by a computer and/or executable by a microprocessor, the computer program comprising program code instructions for executing a method according to any one of the claims 1 to 12 when it is executed by a processor.

14. Recording medium readable by a computer on which there is recorded a computer program comprising instructions for the execution of the steps of the method according to any one of the claims 6 to 12.
